# FASCICULE DE BREVET EUROPEEN

(11) **EP 2 209 607 B1**
(45) Date de publication et mention de la délivrance du brevet: **04.09.2013**
(21) Numéro de dépôt: 08846056.3
(22) Date de dépôt: 27.10.2008
(51) Int. Cl.: B29C 70/46, B29L 31/30, B29K 101/10

(54) **PROCEDE DE REALISATION PAR EMBOUTISSAGE D'UNE PIECE DE STRUCTURE COMPRENANT UNE MATRICE EN RESINE THERMODURCISSABLE**
VERFAHREN ZUR HERSTELLUNG EINES BAUTEILS AUS EINEM WÄRMEHÄRTENDEN HARZ DURCH TIEFZIEHEN
METHOD OF PRODUCING A STRUCTURAL PART MADE FROM A THERMOSETTING RESIN BY DRAWING

(30) Priorité: 31.10.2007 FR 0758729
(43) Date de publication de la demande: 28.07.2010
(73) Titulaire: Airbus Opérations SAS, 31060 Toulouse (FR)
(72) Inventeur: LE HETET, Thomas, F-44118 La Chevroliere (FR)
(74) Mandataire: Fantin, Laurent
(86) Numéro de dépôt international: PCT/FR2008/051929
(87) Numéro de publication internationale: WO 2009/056751

(56) Documents cités:
- EP-A- 1 145 829
- US-B1- 6 884 379
- F. C. CAMPBELL: "Manufacturing processes for advanced composites" 2004, ELSEVIER , OXFORD, UK , XP002522656 ISBN: 1-8561-7415-8 page 99

## Description

La présente invention se rapporte à un procédé de réalisation d'une pièce de structure comprenant une matrice en résine thermodurcissable, ledit procédé étant plus particulièrement adapté pour réaliser les raidisseurs des panneaux de fuselage d'un aéronef. L'invention se rapporte également aux raidisseurs en matériau composite obtenus selon ledit procédé ainsi qu'à un panneau de fuselage intégrant lesdits raidisseurs.

Les panneaux du fuselage d'un aéronef comprennent généralement une peau qui peut être réalisée en matériau composite, ainsi que des raidisseurs sous forme de profilés qui assurent la résistance mécanique de l'ensemble.

A l'avant et à l'arrière du fuselage, les panneaux du fuselage peuvent avoir une double courbure, à savoir une première courbure correspondant au rayon du fuselage dont l'axe est parallèle à l'axe longitudinal de l'aéronef et une seconde courbure dont l'axe est perpendiculaire audit axe longitudinal. En conséquence, en fonction de leur emplacement, les raidisseurs peuvent avoir une double courbure à savoir une génératrice courbe et un vrillage pour le profilé ou présenter des accidents de formes localisés de type soyage par exemple.

Selon les modes de réalisation, les raidisseurs sont liés à la peau par tout moyen connu tel que le rivetage, le collage ou la co-cuisson.

Pour fabriquer les raidisseurs avec une matrice en résine thermodurcissable, une solution consiste à réaliser un drapage à partir de tissus ou de nappes de fibres pré-imprégnées sur un mandrin dont la forme correspond à celle de la section à obtenir puis à cuire l'ensemble sous vide afin de conférer aux raidisseurs les propriétés mécaniques désirées, par polymérisation de la résine.

Selon cette solution, la liaison entre le raidisseur et la peau peut être obtenue par co-cuisson, les deux éléments étant plaqués l'un contre l'autre lors de la cuisson.

Cette solution ne donne pas satisfaction car l'opération de drapage sur une forme en trois dimensions est complexe et peut difficilement être automatisée.

Par ailleurs, cette solution ne permet pas d'obtenir une précision géométrique élevée, seule la face en contact avec le mandrin pouvant être obtenue avec des dimensions précises. Ainsi, cette solution ne permet pas d'obtenir une précision élevée au niveau des épaisseurs et du parallélisme entre la face en contact avec le mandrin et la face opposée.

Selon une autre problématique, à l'état cru, le tissu pré-imprégné avec une résine thermodurcissable a une durée d'utilisation de l'ordre de quelques jours à température ambiante. Aussi, les flux de production doivent garantir impérativement le respect de la durée de péremption de tous les éléments entre le moment du déstockage du tissu pré-imprégné et sa mise en oeuvre par drapage et sa cuisson. Cette contrainte peut s'avérer problématique dans le cas de la réalisation d'un panneau de fuselage. En effet, dans ce cas, il faut réaliser l'ensemble des raidisseurs, les placer sur un mandrin, draper la peau sur le mandrin et cuire l'ensemble avant que l'un des éléments n'ait dépassé sa date de péremption.

Une autre solution consiste à réaliser les profilés par pultrusion. Toutefois, cette technique ne permet pas d'obtenir des raidisseurs susceptibles d'être rapportés sur une peau avec une double courbure, présentant une rotation des sections autour de leurs axes d'inertie. Par ailleurs, cette technique permet d'obtenir que certaines orientations des fibres. Aussi, les pièces réalisées ne peuvent être sollicitées que de manière spécifique en fonction de l'orientation desdites fibres,

Dans le cas de pièces réalisées à partir d'une matrice en résine thermoplastique, on peut procéder à la mise en forme des raidisseurs par formage. Une telle technique est décrite dans le document EP-1.543.942. Dans ce cas, les raidisseurs sont obtenus à partir de flans pré-consolidés qui sont ensuite formés après chauffage de ceux-ci au-dessus de la température de fusion de la résine thermoplastique. Le formage repose sur la transformation réversible de la matrice thermoplastique, les plis de fibres pouvant glisser les uns par rapport aux autres grâce à la faible viscosité de la matrice ou dessus de sa température de fusion.

Cette solution permet d'obtenir une précision géométrique élevée et un taux de productivité supérieur à ceux des autres techniques.

Cependant, les résines thermoplastiques ont certains inconvénients qui résident dans le coût de telles résines et le fait qu'il n'existe pas de procédé de drappage automatisé industriel mettant en oeuvre des pré-imprégnés utilisant ce type de résine.

Par ailleurs, cette technique ne peut pas être transposée aux matrices en résine thermodurcissable. En effet, cette dernière durcit lors de la polymérisation de manière irréversible interdisant tout glissement interlaminaire ultérieur. Ainsi, dans le cas d'une résine thermodurcissable, les glissements interlaminaires ne peuvent s'effectuer que dans des créneaux étroits de temps et de température, lors desquels la polymérisation de la résine n'a pas atteint un seuil au-delà duquel lesdits glissements interlaminaires ne sont plus réalisables. Or, ce laps de temps est trop réduit pour permettre d'incorporer cette étape dans un processus industriel.

Selon le document EP-1.145.829, on connait un procédé de réalisation d'un produit intermédiaire en matériau composite comprenant une résine thermodurcissable, consistant à réaliser un feuilleté plat, à chauffer pour assouplir le feuilleté et à emboutir le feuilleté dans un outillage adapté à la forme souhaitée. Toutefois, le feuilleté n'est pas géométriquement stable après le démoulage.

Aussi, la présente invention vise à pallier aux inconvénients de l'art antérieur en proposant un procédé de réalisation d'un élément de structure d'aéronef, notamment un raidisseur, comprenant une matrice en résine thermodurcissable permettant d'obtenir un meilleur taux de productivité et d'augmenter significativement la durée de péremption.

Selon un autre objectif, le procédé selon l'invention permet d'obtenir une précision géométrique élevée.

A cet effet, l'invention a pour objet un procédé de réalisation d'une pièce de structure d'un aéronef, ladite pièce étant en matériau composite comprenant une résine thermodurcissable et ayant un profil de section emboutissable, ledit procédé consistant :
- à réaliser une ébauche plane par drapage de nappes de renforts pré-imprégnés de résine thermodurcissable,
- à réticuler partiellement ladite ébauche plane, et
- à emboutir l'ébauche plane, après l'avoir préchauffée, entre une matrice et un poinçon appelés outillage, comprenant chacun une empreinte adaptée à la forme de la face en contact de la pièce à réaliser et dont l'entrefer est dimensionné en fonction de la pièce à réaliser,
caractérisé en ce que l'outillage est chauffé pendant et après la phase de formage pour moduler l'avancement de la réticulation à l'issue de l'opération de formage.

D'autres caractéristiques et avantages ressortiront de la description qui va suivre de l'invention, description donnée à titre d'exemple uniquement, en regard des dessins annexés sur lesquels :
- la figure 1 est un schéma illustrant en trait fort l'évolution de la viscosité d'une résine thermodurcissable sans maturation, en trait pointillé l'évolution de la viscosité d'une résine thermodurcissable avec X% de maturation,
- la figure 2 est une vue en perspective d'un outillage permettant la réalisation d'un raidisseur par formage, et
- les figures 3A à 3D sont des coupes illustrant les différentes étapes de l'assemblage d'un raidisseur avec une peau pour obtenir un panneau de fuselage d'aéronef.

Sur la figure 3D, on a représenté une portion d'un panneau du fuselage d'un aéronef comprenant une peau 10 formant la surface aérodynamique de l'aéronef et des raidisseurs 12 assurant notamment la résistance mécanique dudit fuselage. Un seul raidisseur 12 est représenté sur la figure 3D.

Selon un mode de réalisation, les raidisseurs 12 sont réalisés en matériau composite comprenant des renforts sous forme de fibres, par exemple en carbone, noyées dans une matrice en résine thermodurcissable. A titre indicatif, le matériau composite peut comprendre jusqu'à 60% en volume de renforts.

La peau 10 est de préférence réalisée également en matériau composite.

Selon son emplacement, un panneau peut avoir une double courbure, notamment s'il est disposé à l'avant ou à l'arrière du fuselage. Ainsi pour ces panneaux, les raidisseurs longitudinaux, appelés également lisses, ont une double courbure, une première courbure correspondant au rayon du fuselage dont l'axe est parallèle à l'axe longitudinal de l'aéronef et une seconde courbure d'axe perpendiculaire audit axe longitudinal.

Selon certaines configurations, le raidisseur 12 peut en outre présenter des accidents de formes localisés de type soyage, par exemple pour s'adapter à des modifications locales de niveau de sa surface d'appui.

L'invention est décrite pour ce type de raidisseurs avec une double courbure car ils sont les plus complexes à réaliser. Cependant, elle n'est pas limitée à cette application. Ainsi, elle peut être utilisée pour produire des raidisseurs droits, sans rayon de courbure, ou avec un seul rayon de courbure. De même, ce procédé n'est pas limité aux raidisseurs appliqués contre la peau du fuselage mais à tous les raidisseurs comprenant une matrice thermodurcissable, ayant un profilé de section emboutissable, par exemple en forme de L, de U, de Oméga ou autre. Selon l'invention, le procédé consiste à réaliser une ébauche plane par drapage de nappes de renforts pré-imprégnés de résine thermodurcissable.

Ce drapage est de préférence réalisé de manière automatisée afin d'améliorer la productivité. L'orientation des nappes est ajustée de manière à faciliter l'opération d'emboutissage. Cependant, l'orientation des fibres a une influence réduite sur la faisabilité de l'emboutissage.

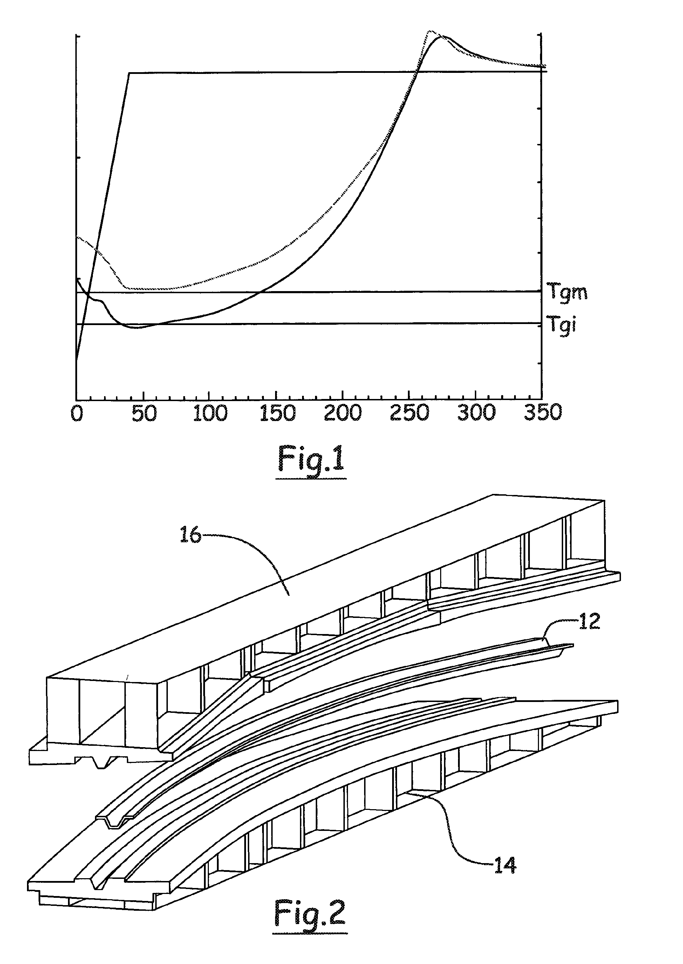

En suivant, le ou les ébauches subissent une cuisson partielle pour obtenir un état mi-cuit caractérisé par une réticulation partielle de l'ordre de 15 à 50%. Suite à cette réticulation partielle, la température de transition vitreuse Tg à partir de laquelle la matière évolue est plus élevée. Sur la figure 1, on a représenté à titre d'exemple, l'évolution de la viscosité d'une résine thermodurcissable sans maturation en trait fort et l'évolution de la viscosité de la même résine thermodurcissable après une maturation de X% (correspondant à une réticulation de l'ordre de X%) en trait pointillé. On constate que la température Tgi correspondant à la viscosité minimale initiale est inférieure à la température Tgm correspondant à la viscosité minimale après réticulation partielle.

Avantageusement, le pourcentage de la réticulation est ajusté de manière à ce que Tgm soit supérieure à la température ambiante d'un atelier. Ainsi, il n'est plus nécessaire de stocker les ébauches dans des zones réfrigérées. Cette cuisson partielle permet ainsi d'augmenter de manière significative la durée de péremption.

A titre d'exemple, sans maturation, la durée de vie des tissus pré-imprégnés en atelier est de l'ordre de 2 à 4 semaines avec une température contrôlée à 20°C +/-2°C et une hygrométrie contrôlée.

Après une maturation de l'ordre de 30%, on obtient un taux de réticulation inférieur à 35% après 4 mois dans le même atelier, soit une évolution très ralentie.

Selon un autre avantage, cette réticulation partielle autorise le formage ultérieur de la pièce et l'intégration de cette étape de formage dans un procédé industriel sans être trop contraint sur le plan de la durée de péremption des éléments à assembler.

Ultérieurement, l'ébauche plane est préchauffée de manière à atteindre la viscosité la plus faible pour la matrice en résine thermodurcissable afin que le cisaillement laminaire s'opère entre chaque couche de tissu de manière à éviter des ondulations.

Cette température de préchauffage est déterminée en fonction de la rhéologie de la résine utilisée et en fonction de l'avancement de la maturation de la matrice.

La température de préchauffage est maintenue de manière à obtenir une température homogène de la matrice.

L'opération de préchauffage de l'ébauche peut être réalisée en disposant le ou les ébauches dans un four chauffant à infra rouge ou à l'aide de panneaux radians infra rouge. Cependant, l'invention n'est pas limitée à ces techniques de préchauffage.

Après cette étape de préchauffage, l'ébauche plane est formée pour générer une pièce en trois dimensions. Cette étape de formage consiste à emboutir l'ébauche plane entre une matrice 14 et un poinçon 16, comprenant chacun une empreinte adaptée à la forme de la face en contact du raidisseur 12 à réaliser.

L'ébauche plane étant pressée entre deux éléments rigides dont l'entrefer est dimensionné en fonction de la pièce à réaliser, on obtient une géométrie de précision élevée, notamment une épaisseur et un parallélisme maîtrisés entre les deux faces utiles du raidisseur.

Par ailleurs, cette technique de formage permet d'obtenir un taux de productivité élevé.

Le temps imparti pour l'opération de formage doit être le plus court possible afin d'éviter une augmentation trop importante de la viscosité susceptible de nuire à ladite opération.

L'outillage utilisé pour le formage peut être chauffé préalablement à l'étape de formage pour éviter le refroidissement de l'ébauche. Il est chauffé pendant la phase de formage et après la phase de formage pour moduler l'avancement de la cuisson. Cette solution permet d'éviter le transfert vers un autre outillage pour la cuisson, ce qui permet de réduire les coûts d'outillage et limite le refroidissement de la pièce.

Selon les variantes, l'avancement de la cuisson peut être plus ou moins important à l'issue de l'opération de formage. Ainsi, la pièce peut comprendre une matrice totalement réticulée ou partiellement réticulée autorisant une étape d'assemblage par co-cuisson. De préférence, le pourcentage de réticulation sera ajusté de manière à obtenir un bon compromis entre la conservation de la forme à l'issue du formage qui conduit à choisir un pourcentage élevé et la possibilité de pouvoir assembler le raidisseur avec la peau par co-cuisson qui conduit à choisir un pourcentage faible. Pour obtenir un bon compromis, le pourcentage de réticulation après l'opération de formage doit être compromis de préférence entre 20 et 30%.

Lorsqu'on souhaite obtenir une pièce entièrement réticulée, l'outillage doit être à une température permettant de maintenir la pièce à la température de polymérisation.

Dans ce cas la forme de la pièce est figée par la réticulation au moment de la polymérisation et la forme de l'empreinte et du poinçon doivent être telles qu'elles correspondent à la forme de la pièce à cette température de polymérisation. Il est donc nécessaire de tenir compte de la dilatation thermique de l'outillage à la température de polymérisation dans la définition de l'outillage, réalisé généralement par usinage à température ambiante. La prise en compte de ces facteurs d'échelle est généralement empirique et nécessite des mises au point. La forme de la pièce étant figée par la polymérisation, le démoulage doit intervenir à une température proche de cette température (de l'ordre de 130°C à 180°C selon les résines utilisées), sous peine que l'outillage ne contraigne la pièce au cours de son retrait en refroidissant.

Lorsqu'on souhaite obtenir une pièce partiellement réticulé, l'outillage doit être proche de la température de démoulage.

En effet, lorsque la résine n'est que partiellement mais suffisamment réticulée, la forme de la pièce va suivre le retour dimensionnel de l'outillage jusqu'à la température de démoulage (de l'ordre de 70°C), tout en étant géométriquement très stable dans le temps après son démoulage (éventuellement plusieurs semaines à température ambiante). Ainsi, la prise en compte de la dilatation thermique de l'outillage dans sa réalisation est facilitée, les facteurs d'échelle à prendre en compte étant moins élevés, et le temps de mise au point réduit. Par ailleurs, le démoulage est facilitée pour l'opérateur, la pièce et l'outillage étant moins chauds.

Ainsi, si l'on souhaite obtenir une pièce entièrement réticulée, les dimensions de l'outillage seront déterminées pour que les dimensions de l'outillage à la température de cuisson correspondent à celles de la pièce à obtenir. Si l'on souhaite obtenir une pièce partiellement réticulée, les dimensions de l'outillage seront déterminées pour que les dimensions de l'outillage à la température de démoulage correspondent à celles de la pièce à obtenir.

La matrice et/ou le poinçon peuvent avoir des parties mobiles mécanisées pour obtenir des formes en contre dépouille.

De préférence, la vitesse de fermeture de l'outillage est ajustée en fonction de la rhéologie de la résine afin d'obtenir un compromis entre la qualité du cisaillement laminaire qui conduit à choisir une vitesse faible et un maintien de la température qui conduit à une vitesse rapide. En variante, l'étape de formage peut comprendre plusieurs vitesses, une vitesse d'approche rapide jusqu'à ce que le poinçon vienne en contact avec l'ébauche plane suivie d'une vitesse de travail réduite jusqu'à la fermeture de l'outillage.

La gamme de vitesse acceptable se situe entre 1 et 8 mm/s, la gamme de vitesse optimale entre 1 et 3 mm/s.

Après la fermeture de l'outillage, ce dernier doit rester fermé pendant une certaine durée, à une pression donnée pour réduire la porosité de la pièce.

Cette pression ne doit pas être trop élevée pour éviter les phénomènes d'essorage qui se caractérisent par l'expulsion de la résine dans une zone donnée. Pour limiter les risques d'apparition de ce phénomène, une solution consiste à placer des cales entre le poinçon et la matrice afin de ne pas descendre en deçà d'une certaine épaisseur.

La pression à appliquer est également ajustée en fonction de l'état de maturation de l'ébauche plane à former, une maturation avancée conduisant à une pression plus élevée.

La gamme de pression optimale se situe entre 5 et 7 bars.

A l'issue de l'étape de formage, la pièce peut être ensuite détourée.

Même si le formage est réalisée de préférence sur une pièce partiellement réticulée, il peut être opéré sur une pièce crue ou non cuite.

A titre indicatif, une gamme de transformation d'une ébauche crue en raidisseur cuit pour une co-cuisson comprend les étapes suivantes :
- un drapage automatisé de 12 plis de nappes carbone avec une matrice en résine M21 pour obtenir des ébauches planes,
- une découpe des ébauches,
- un préchauffage de l'ébauche plane à une température de 130°C (température de la viscosité minimale pour une matrice non réticulée) pendant une durée de 4min pour une homogénéité de la température de l'ébauche à coeur,
- un transfert de l'ébauche plane préchauffée vers l'outillage en position ouvert, le poinçon étant écarté de la matrice,
- un emboutissage en trois phases, une descente avec une vitesse maxi jusqu'au contact du poinçon avec l'ébauche plane, une descente avec une vitesse de travail plus lente, un maintien en pression de la pièce à une pression de l'ordre de 7 bars,
- un cycle de cuisson de 2 h à 180°C avec une pression de l'ordre de 7 bars,
- un démoulage de la pièce cuite.

Une fois formé, le raidisseur est assemblé avec la peau afin d'obtenir un panneau de fuselage.

La liaison entre la peau et le raidisseur peut être obtenue de différentes façons telles qu'une opération d'assemblage par cocuisson appelé « cocuring » entre deux éléments composites non réticulés ou un non réticulé et un partiellement réticulé,

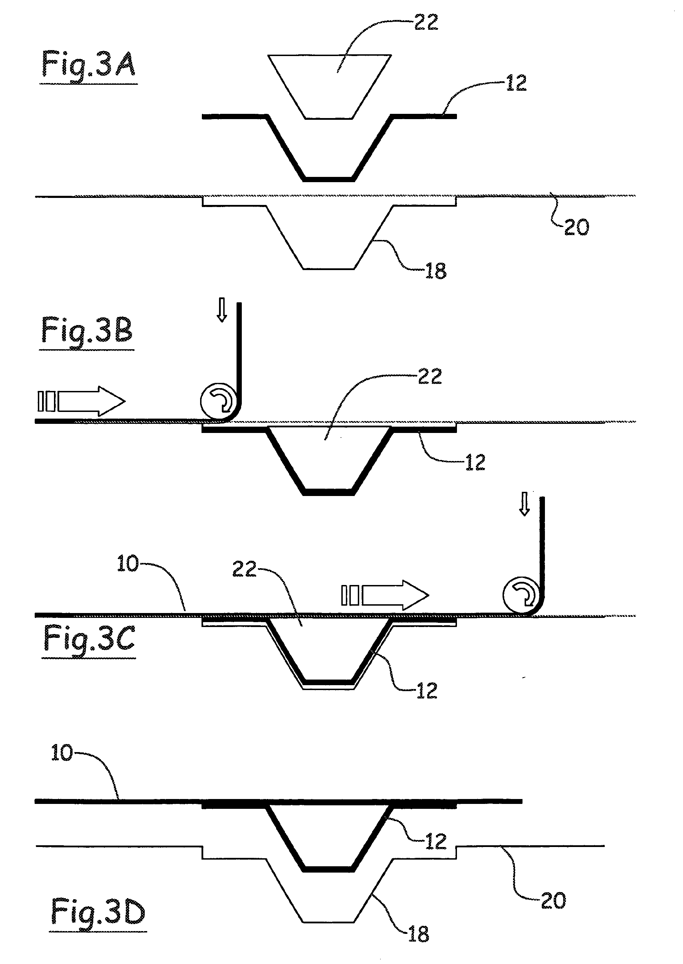

Comme indiqué précédemment, l'étape de formage par emboutissage de l'ébauche plane entre deux éléments rigides délimitant un entrefer dimensionné permet d'obtenir une géométrie de précision élevée. Ainsi, il est possible d'assembler le raidisseur avec la peau par cocuisson comme illustré sur les figures 3A à 3D. Lors de la première étape illustrée sur la figure 3A, les raidisseurs 12 sont disposés dans des logements 18 ménagés à la surface d'un moule 20 sur lequel sera drapée la peau 10. Le formage par emboutissage permet d'obtenir une précision dimensionnelle élevée au niveau de la face externe du raidisseur 12 assurant un contact intime entre le raidisseur et le moule afin de ne pas générer des problèmes de déformation lors de la phase de polymérisation.

Un noyau 22 peut être disposé dans le creux du ou des raidisseurs 12 afin d'offrir une surface venant dans le prolongement de la surface du moule 20. Le formage par emboutissage permet également d'obtenir une précision dimensionnelle élevée au niveau de la surface interne du raidisseur, en contact avec la peau, assurant la continuité de la surface du moule pour le drapage ultérieur de la peau comme illustré sur la figure 3B.

Lorsque les raidisseurs sont tous placés, l'opération de drapage de la peau est réalisée, comme illustré sur les figures 3B et 3C. Au préalable, en fonction du type d'assemblage, une colle peut être appliquée sur les surfaces des raidisseurs en contact avec la peau.

En suivant, l'ensemble est soumis à une élévation de température, dans un autoclave par exemple, pour obtenir la polymérisation des matrices de résine ainsi qu'à une pression pour réduire la porosité desdites matrices.

En fin de procédé, on obtient un panneau de fuselage en matériau composite.

## Revendications

1. Procédé de réalisation d'une pièce de structure d'un aéronef, ladite pièce étant en matériau composite comprenant une résine thermodurcissable et ayant un profil de section emboutissable, ledit procédé consistant :
- à réaliser une ébauche plane par drapage de nappes de renforts pré-imprégnés de résine thermodurcissable,
- à réticuler partiellement ladite ébauche plane, et
- à emboutir l'ébauche plane, après l'avoir préchauffée, entre une matrice (14) et un poinçon (16) appelés outillage, comprenant chacun une empreinte adaptée à la forme de la face en contact de la pièce à réaliser et dont l'entrefer est dimensionné en fonction de la pièce à réaliser,
**caractérisé en ce que** l'outillage est chauffé pendant et après la phase de formage pour moduler l'avancement de la réticulation à l'issue de l'opération de formage pour que la pièce soit géométriquement stable après le démoulage.

2. Procédé de réalisation d'une pièce de structure d'un aéronef selon la revendication 1, caractérisé en ce l'outillage est chauffé jusqu'au démoulage.

3. Procédé de réalisation d'une pièce de structure d'un aéronef selon la revendication 1 ou 2, **caractérisé en ce qu'**il consiste à préchauffer l'ébauche plane préalablement à l'opération d'emboutissage de manière à atteindre la viscosité la plus faible pour la matrice en résine thermodurcissable.

4. Procédé de réalisation d'une pièce de structure d'un aéronef selon la revendication 3, **caractérisé en ce que** le pourcentage de réticulation après l'opération de formage doit être compris entre 20 et 30%.

5. Procédé de réalisation d'une pièce de structure d'un aéronef selon l'une des revendications 1 à 4, **caractérisé en ce que** la vitesse de fermeture de l'outillage est ajustée en fonction de la rhéologie de la résine afin d'obtenir un compromis entre la qualité du cisaillement laminaire et le maintien de la température.

6. Procédé de réalisation d'une pièce de structure d'un aéronef selon la revendication 5, **caractérisé en ce que** la vitesses de fermeture de l'outillage est comprise entre 1 et 3 mm/s.

7. Procédé de réalisation d'une pièce de structure d'un aéronef selon l'une des revendications 1 à 6, **caractérisé en ce qu'**après la fermeture de l'outillage, ce dernier doit rester fermé à une pression comprise entre 5 et 7 bars pour réduire la porosité de la pièce.

8. Procédé de réalisation par co-cuisson d'un panneau de fuselage d'aéronef comprenant une peau en matériau composite et au moins un raidisseur en matériau composite comprenant une matrice en résine thermodurcissable, le dit procédé comprenant les étapes consistant à obtenir un raidisseur à partir du procédé selon l'une quelconque des revendications précédentes, à disposer ledit raidisseur dans un logement ménagé à la surface d'un moule sur lequel doit être drapée la peau, à placer éventuellement un noyau dans l'éventuel creux formé par le raidisseur, à draper la peau, et à soumettre l'ensemble à une élévation de température et de pression afin d'obtenir la cuisson du panneau.

## Patentansprüche

1. Verfahren zur Herstellung eines Bauteils eines Luftfahrzeugs aus Kompositmaterial, das ein wärmehärtbares Harz und ein tiefziehbares Querschnittsprofil aufweist, wobei das Verfahren umfasst:
- Herstellen einer flachen Vorform durch Ablage von Verstärkungslagen, die mit einem wärmehärtbaren Harz vorimprägniert sind,
- teilweises Vernetzen der flachen Vorform, und
- Tiefziehen der flachen Vorform, nachdem diese vorgewärmt worden ist, zwischen einer Matrize (14) und einem Stempel (16), genannt Werkzeug, wobei beide einen an die Gestalt der Kontaktfläche des herzustellenden Teils angepassten Abdruck aufweist und deren Spalt in Abhängigkeit von dem herzustellenden Teil bemessen ist,
**dadurch gekennzeichnet, dass** das Werkzeug während und nach der Formphase geheizt wird, um das Fortschreiten der Vernetzung nach dem Formgebungsvorgang anzupassen, so dass das Teil nach der Entformung geometrisch stabil ist.

2. Verfahren zur Herstellung eines Bauteils eines Luftfahrzeugs nach Anspruch 1, **dadurch gekennzeichnet, dass** das Werkzeug bis zur Entformung geheizt wird.

3. Verfahren zur Herstellung eines Bauteils eines Luftfahrzeugs nach Anspruch 1 oder 2, **dadurch gekennzeichnet, dass** bei diesem die flache Vorform vor dem Tiefziehvorgang derart vorgewärmt wird, dass die größte Leichtflüssigkeit der Matrix aus wärmehärtbarem Harz erzielt wird.

4. Verfahren zur Herstellung eines Bauteils eines Luftfahrzeugs nach Anspruch 3, **dadurch gekennzeichnet, dass** der Prozentsatz der Vernetzung nach der Formgebung zwischen 20 und 30% liegt.

5. Verfahren zur Herstellung eines Bauteils eines Luftfahrzeugs nach einem der Ansprüche 1 bis 4, **dadurch gekennzeichnet, dass** die Schließgeschwindigkeit des Werkzeugs in Abhängigkeit vom Fließverhalten des Harzes eingestellt wird, um einen Kompromiss zwischen der Qualität der laminalen Scherung und dem Aufrechterhalten der Temperatur zu erzielen.

6. Verfahren zur Herstellung eines Bauteils eines Luftfahrzeugs nach Anspruch 5, **dadurch gekennzeichnet, dass** die Schließgeschwindigkeit des Werkzeugs zwischen 1 und 3 mm/s liegt.

7. Verfahren zur Herstellung eines Bauteils eines Luftfahrzeugs nach einem der Ansprüche 1 bis 6, **dadurch gekennzeichnet, dass** das Werkzeug nach dem Schließen des Werkzeugs mit einem Druck zwischen 5 und 7 bar geschlossen bleibt, um die Porosität des Teils zu verringern.

8. Verfahren zur Herstellung einer Rumpfplatte eines Luftfahrzeugs mit einer Haut aus Kompositmaterial und von wenigstens einer Versteifung aus Kompositmaterial, das wenigstens eine Matrix aus wärmehärtbarem Harz enthält, durch eine gemeinsame Wärmebehandlung, wobei das Verfahren Verfahrensschritte umfasst, die darin bestehen, eine Versteifung gemäß einem der vorhergehenden Ansprüche zu erzeugen, die Versteifung in eine auf der Oberfläche einer Form ausgebildete Aufnahme einzubringen, auf die die Haut abgelegt wird, eventuell einen Kern in den eventuellen von der Vertiefung gebildeten Hohlraum einzubringen, die Haut abzudecken, und die Einheit einer erhöhten Temperatur und einem erhöhten Druck auszusetzen, um die Wärmebehandlung der Platte durchzuführen.

## Claims

1. Process for the production of a structural part of an aircraft, whereby said part is made of composite material that comprises a thermosetting resin and that has a section profile that can be stamped, whereby said process consists in:
- Producing a flat blank by draping layers of supports that are preimpregnated with thermosetting resin,
- Partially cross-linking said flat blank, and
- Stamping the flat blank, after preheated it, between a matrix (14) and a punch (16) called the equipment, each comprising an impression that is adapted to the shape of the surface that is in contact with the part that is to be produced and whose air gap is sized based on the part that is to be produced,
**characterized in that** the equipment is heated during and after the phase of forming to modulate the progress of the cross-linking at the end of the forming operation.

2. Process for the production of a structural part of an aircraft according to claim 1, wherein the equipment is heated until the demolding takes place.

3. Process for the production of a structural part of an aircraft according to claim 1 or 2, wherein it consists in preheating the flat blank prior to the stamping operation so as to reach the lowest viscosity for the thermosetting resin matrix.

4. Process for the production of a structural part of an aircraft according to claim 3, wherein the cross-linking percentage after the forming operation is to be between 20 and 30%.

5. Process for the production of a structural part of an aircraft according to one of claims 1 to 4, wherein the speed of closing the equipment is adjusted based on the rheology of the resin so as to obtain a compromise between the quality of the laminar shearing and maintaining the temperature.

6. Process for the production of a structural part of an aircraft according to claim 5, wherein the closing speed of the equipment is between 1 and 3 mm/s.

7. Process for the production of a structural part of an aircraft according to one of claims 1 to 6, wherein after the equipment is closed, the latter is to remain closed for a certain period at a pressure of between 5 and 7 bar to reduce the porosity of the part.

8. Process for the production by co-baking of an aircraft fuselage panel that comprises a skin that is made of composite material and at least one stiffener that is made of composite material that comprises a thermosetting resin matrix, whereby said process comprises stages that consist in obtaining a stiffener starting from the process according to any of the preceding claims, in placing said stiffener in a housing that is provided at the surface of a mold on which the skin is to be draped, in optionally placing a core in the possible hollow that is formed by the stiffener, in draping the skin, and in subjecting the unit to a rise in temperature and pressure so as to obtain the baking of the panel.
